(19)

Europäisches
Patentamt
European
Patent Office
Office européen
des brevets

(11) **EP 2 575 348 A2**

(12) **EUROPEAN PATENT APPLICATION**

(43) Date of publication:
**03.04.2013 Bulletin 2013/14**

(51) Int Cl.:
*H04N 1/407* (2006.01)   *G06T 5/00* (2006.01)
*G06T 5/40* (2006.01)

(21) Application number: **12275152.2**

(22) Date of filing: **27.09.2012**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **29.09.2011 KR 20110099227**<br><br>(71) Applicant: **Samsung Electro-Mechanics Co., Ltd<br>Suwon, Gyunggi-Do (KR)** | (72) Inventors:<br> • **Min, Kyoung Joong<br>  153-766 Seoul (KR)**<br> • **Song, In Taek<br>  443-725 Gyeonggi-do (KR)**<br> • **Kwon, Tae Hyeon<br>  423-720 Gyeonggi-do (KR)**<br><br>(74) Representative: **Powell, Timothy John<br>Potter Clarkson LLP<br>The Belgrave Centre<br>Talbot Street<br>Nottingham NG1 5GG (GB)** |

(54)   **Image processing device and method for processing image**

(57)   The present invention relates to an image processing device (100) and a method for processing an image. The image processing device includes a brightness improvement unit (110) to improve a brightness of inputted images by increasing a brightness of a dark image darker than a knee point among inputted images with reference to a predetermined knee point and decreasing a brightness of an image brighter than the knee point; and a contrast improvement unit (120) to improve a contrast of the image outputted from the brightness improvement unit. The image processing device and the method for processing the image can reduce a distortion phenomenon and a saturation phenomenon or the like by reflecting the characteristics of images during the brightness improvement and contrast improvement of the images.

[FIG. 5]

100

EP 2 575 348 A2

**Description**

CROSS-REFERENCE TO RELATED APPLICATIONS

Claim and incorporate by reference domestic priority application and foreign priority application as follows:

"CROSS REFERENCE TO RELATED APPLICATION

This application claims the benefit under 35 U.S.C. Section 119 of Korean Patent Application Serial No. 10-2011-0099227, entitled filed September 29, 2011, which is hereby incorporated by reference in its entirety into this application."

BACKGROUND OF THE INVENTION

1. Field of the Invention

The present invention relates to an image processing device and a method for processing an image.

2. Description of the Related Art

Recently, a digital imaging device such as a digital camera or a digital camcorder has been rapidly distributed.
The digital imaging device obtains an image in a method of digitalizing information related to light by transferring the light emitted from an object to an image sensor.
On the other hand, in the digital imaging device, the brightness related to the obtained image data can be improved or the contrast thereof can be improved.
Herein, the contrast means the difference between a bright region and a dark region, as such contrast becomes larger, a definition is increased; and as the contrast becomes smaller, and the definition is decreased.
As a method for improving such contrast, a histogram stretching method is widely used.

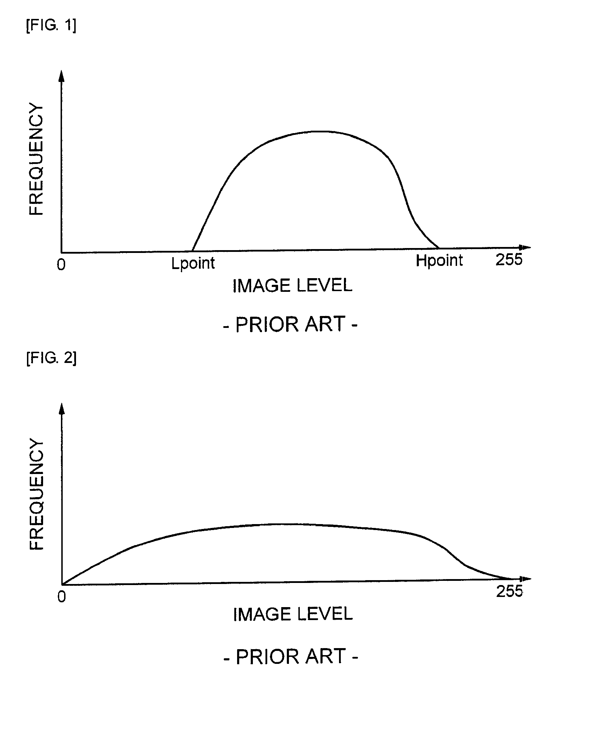

FIG. 1 is a view showing a histogram distribution of inputted images and FIG. 2 is a view showing a histogram distribution of images after the histogram of the inputted images is stretched.
Referring to FIG. 1 and FIG. 2, if a frequency distributed at a narrow region in the histogram is stretched to be distributed widely, the image having the large difference between the bright region and the dark region can be generated.
Meanwhile, as a patent reference 1 is a technology invented by a commonly owned inventor of the present invention, a histogram stretching apparatus is proposed.

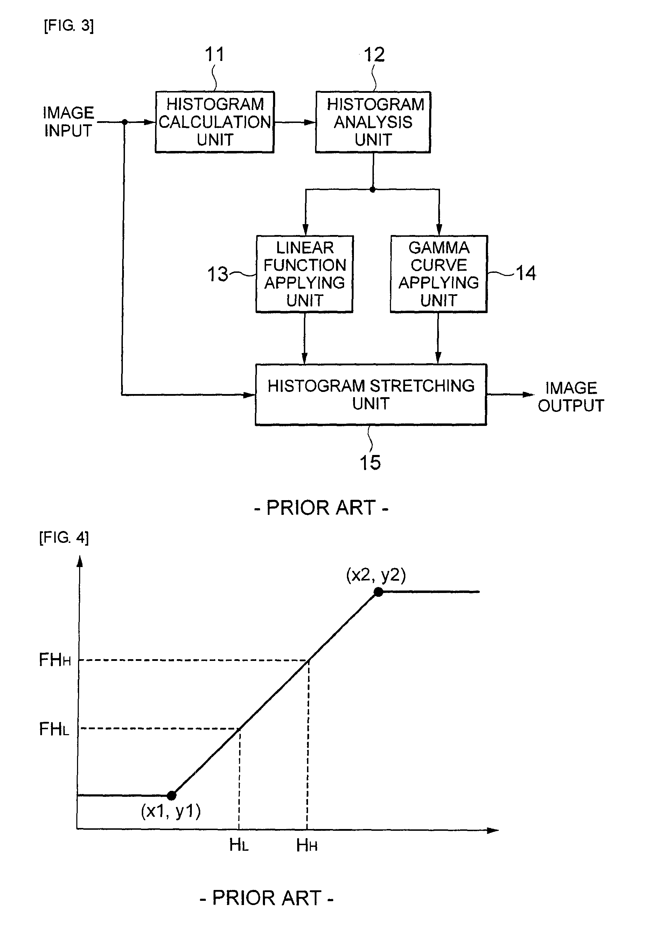

FIG. 3 is a view depicting a contrast improvement unit according to a prior art.
Although the decrement of contrast can be improved by using the contrast improvement unit shown in FIG. 3 and the effects such as the brightness improvement in the dark region and the improvement of contrast decrement thereto can be realized, there are still generated distortions, when a very dark single color or a very bright single color image is inputted.
And also, FIG. 4 is a view depicting an application example of linear function at a single color image according to a prior art, referring to FIG. 4, when 0 ~ (X1, Y1) or (X2, Y2) ~ 255, there is generated a problem in the image output, if a slope of linear function is larger than 1, there is still problem that a distortion phenomenon, i.e., amplification phenomenon of noises, in improving the contrast.
And also, since the same gamma curve is uniformly applied to an image level of a gamma curve applying unit 14 of FIG. 3, there is a problem that the bright region is saturated.
Particularly, since the images obtained by using an infrared camera to be used at night or the like are dark as a whole, the line of sight distance is short, in this results, the brightness of such images needs to be improved. However, although the reduction of contrast is generated when the brightness of such infrared obtained images is improved, there are problems that the brightness can be improved as well as the contrast can be improved at the same time by using the conventional technology including the patent reference 1.
And also, in the single color image, the image distortion phenomenon is very serious due to the increment of contrast.
And also, according to the technology introduced in the patent reference 1, although the fixed final minimum brightness value and final maximum brightness value are applied as a range to expand the contrast, in case when the range of such contrast expansion is uniformly applied regardless of the type and characteristics of images, there is generated a problem that the image in the dark region where the brightness is improved becomes dark again.
That is, the images in the bright condition become good images due to the increment of contrast if the contrast is strong, but there is a need to apply the range for the contrast emphasis adaptively according to the characteristic of images since the images obtained at the dark condition become dark again due to the contrast emphasis, however, the technology to satisfy such needs cannot be still developed.

[Prior Art technical references]

[Patent references]

(Patent reference 1): Korean issued patent No. 10-0916073

## SUMMARY OF THE INVENTION

The present invention has been invented in order to overcome the above-described problems and it is, therefore, an object of the present invention to provide an image processing device and a method for processing an image capable of improving a distortion phenomenon, a saturation phenomenon or the like by reflecting the characteristics of images during the brightness improvement and the contrast improvement of the images.

In accordance with one aspect of the present invention to achieve the object, there is provided a brightness improvement unit to improve an image processing device including a brightness of inputted images by increasing a brightness of a dark image more darker than a knee point among inputted images with reference to a predetermined knee point and decreasing a brightness of an image more brighter than the knee point; and a contrast improvement unit to improve a contrast of the image outputted from the brightness improvement unit.

At this time, the knee point is set to a point to be changed to a state larger than a predetermined value under the condition that a change of frequency is smaller than the predetermined value at a histogram of the inputted images.

And also, the brightness improvement unit includes: a brightness determining unit to compare a brightness value of the inputted images with the knee point; and a brightness adjusting unit to adjust the brightness by applying a first gamma curve having a gamma γ larger than 1 for an image having a brightness value smaller than the knee point and by applying a second gamma curve having a gamma γ smaller than 1 for an image having a brightness value larger than the knee point according to a determined result of the brightness determining unit.

And also, the brightness improvement unit includes: a brightness determining unit to compare a brightness value of the inputted images with the knee point; and a brightness adjusting unit to adjust the brightness by applying a first gamma curve having a gamma γ larger than 1 for an image having a brightness value smaller than the knee point and by applying a second gamma curve having a gamma γ smaller than 1 for an image having a brightness value larger than the knee point according to a determined result of the brightness determining unit.

And also, the brightness improvement unit includes a first histogram analyzing unit to calculate a frequency for each brightness of the inputted images and derive an image level $Lp1$ of a first minimum bright point as the most dark point among the inputted images and an image level $Hp1$ of a first maximum bright point as the brightest point among the inputted images so as to supply the derived result to the contrast improvement unit.

And also, the brightness improvement unit includes a first histogram analyzing unit to calculate a frequency for each brightness of the inputted images, to derive an image level $Lp1$ of a first minimum bright point as the most dark point among the inputted images and an image level $Hp1$ of a first maximum bright point as the brightest point among the inputted images so as to supply the derived result to the contrast improvement unit, and to derive the knee point.

And also, the contrast improvement unit includes a second histogram analyzing unit to calculate a frequency for each brightness of the images outputted from the brightness improvement unit and derive an image level $Lp2$ of a second minimum bright point as the most dark point among the images outputted from the brightness improvement unit and an image level $Hp2$ of a second maximum bright point as the brightest point among the images outputted from the brightness improvement unit; and

when Outlmg is an image level of the output images, Inlmg is an image level of imaged outputted from the brightness improvement unit, the $Lp1$ is an image level of the first minimum bright point, the $Hp1$ is an image level of the first maximum bright point, the $Lp2$ is an image level of the second minimum bright point and the $Hp2$ is an image level of the second maximum bright point,

$$\text{Outlmg} = ((Hp2-Lp1) * (Inlmg-Lp2)/(Hp2-Lp2)) + Lp1 \qquad \text{Equation 1}$$

the output image is outputted by improving the contrast by applying the Equation 1.

At this time, {Hp2 + (Hp2-Hp1) *weight is substituted in place of Hp1 and {Lp2 + (Lp2-Lp1) *weight is substituted in place of the Lp1 and the weight becomes small as a real number ranging from 0 to 1, as being close to a single image.

And also, the second histogram analyzing unit further derives a width of an image level of the inputted images or a width of an image level of the images outputted from the brightness improvement unit; and the contrast improvement unit further comprises a weight determining unit to determine a weight according to the width of the image level of the inputted images or the width of the image level of the images outputted from the brightness improvement unit.

And also, the weight determining unit sets a width of an image level of a single image as an image threshold value; and determines the weight as being in proportional to a difference between the width of the image level of the inputted image and the image threshold value or a difference between a width of an image level of images outputted from the brightness improvement unit and the image threshold value.

In accordance with another aspect of the present invention to achieve the object, there is provided an image processing device including: a brightness improvement unit to derive an image level Lp1 of a first minimum bright point Lp1 a most dark point among inputted images and an image level Hp1 of a first maximum bright point as the most brightest point among the inputted images and to improve a brightness of the inputted images; and a contrast improvement unit to improve a contrast of the image outputted from the brightness improvement unit by applying the image level of the first minimum bright point and the image level of the first maximum bright point.

And also, the contrast improvement unit includes a second histogram analyzing unit to calculate a frequency for each brightness of the images outputted from the brightness improvement unit and derive an image level Lp2 of a second minimum bright point as the most dark point among the images outputted from the brightness improvement unit and an image level Hp2 of a second maximum bright point as the brightest point among the images outputted from the brightness improvement unit; and when OutImg is an image level of the output images, InImg is an image level of imaged outputted from the brightness improvement unit, the Lp1 is an image level of the first minimum bright point, the Hp1 is an image level of the first maximum bright point, the Lp2 is an image level of the second minimum bright point and the Hp2 is an image level of the second maximum bright point,

$$\text{OutImg} = ((\text{Hp2-Lp1}) * (\text{InImg-Lp2}) / (\text{Hp2-Lp2})) + \text{Lp1} \qquad \text{Equation 1}$$

the output image is outputted by improving the contrast by applying the Equation 1.

And also, {Hp2 + (Hp2-Hp1) *weight is substituted in place of Hp1 and {Lp2 + (Lp2-Lp1) *weight is substituted in place of the Lp1, and the weight becomes small as a real number ranging from 0 to 1, as being close to a single image.

And also, the second histogram analyzing unit further derives a width of an image level of the inputted images or a width of an image level of the images outputted from the brightness improvement unit; and the contrast improvement unit further comprises a weight determining unit to determine a weight according to the width of the image level of the inputted images or the width of the image level of the images outputted from the brightness improvement unit.

And also, the weight determining unit sets a width of an image level of a single image as an image threshold value; and determines the weight as being in proportional to a difference between the width of the image level of the inputted image and the image threshold value or a difference between a width of an image level of images outputted from the brightness improvement unit and the image threshold value.

In accordance with another aspect of the present invention to achieve the object, there is provided a method for processing an image including:

(A) analyzing a histogram of an inputted image;
(B) improving a brightness of the inputted image;
(C) analyzing a histogram of the brightness improved image; and
(D) improving a contrast of the brightness improved image,

wherein the step (b) improves a brightness of inputted images by increasing a brightness of a dark image more darker than a knee point among inputted images with reference to a predetermined knee point and decreasing a brightness of an image more brighter than the knee point.

And also, the knee point is set to a point to be changed to a state larger than a predetermined value under the condition that a change of frequency is smaller than the predetermined value at a histogram of the inputted images.

And also, the step (A) is to derive a point to be changed to a state larger than a predetermined value under the condition that a change of frequency is smaller than the predetermined value at a histogram of the inputted images as the knee point by analyzing the histogram of the inputted image.

And also, the step (B) is to improve a brightness by applying a first gamma curve having a gamma γ larger than 1 for an image having a brightness value smaller than the knee point and by applying a second gamma curve having a gamma γ smaller than 1 for an image having a brightness value larger than the knee point according to a determined result of the brightness determining unit.

And also, the step (B) includes:

(b1) comparing a brightness value of an inputted image to the knee point; and
(b2) according to a determined result of the step (b1), improving a brightness by applying a first gamma curve having a gamma γ larger than 1 for an image having a brightness value smaller than the knee point and by applying a second gamma curve having a gamma γ smaller than 1 for an image having a brightness value larger than the knee point.

And also, the step (A) derives an image level Lp1 of a first minimum bright point among the inputted images as a most dark point and an image level Hp1 of a first maximum bright point as a brightest point among the inputted images by analyzing a histogram of the inputted images.

And also, the step (C) derives an image level Lp2 of a second minimum bright point as a most dark point among the brightness improved images in the step (B) and an image level Hp2 of a second maximum bright point as a brightest point among the brightness improved images in the step (B).

And also, in the step (D), when OutImg is an image level of the output images, InImg is an image level of imaged outputted from the brightness improvement unit in the step (B), the Lp1 is an image level of the first minimum bright point, the Hp1 is an image level of the first maximum bright point, the Lp2 is an image level of the second minimum bright point and the Hp2 is an image level of the second maximum bright point,

$$OutImg = ((Hp2-Lp1) * (InImg-Lp2)/(Hp2-Lp2))+Lp1 \qquad \text{Equation 1}$$

the output image is outputted by improving the contrast by applying the Equation 1.

And also, in the step (D), {Hp2 + (Hp2-Hp1) *weight is substituted in place of Hp1 and {Lp2 + (Lp2-Lp1) *weight is substituted in place of the Lp1, and the weight becomes small as a real number ranging from 0 to 1, as being close to a single image.

And also, the step (C) further derives a width of image levels of the inputted images or a width of image levels of images outputted from the brightness improvement unit; and the step (D) includes a process to determine a weight according to the width of image levels of the inputted images or the width of image levels of images outputted from the brightness improvement unit.

And also, the process to determine the weight sets a width of an image level of a single image as an image threshold value; and determine the weight as being in proportional to a difference between the width of the image level of the inputted image and the image threshold value or a difference between a width of an image level of images outputted from the brightness improvement unit and the image threshold value.

In accordance with another aspect of the present invention to achieve the object, there is provided a method for processing an image including:

(A) deriving an image level Lp1 of a first minimum bright point as a most dark point among the inputted images and an image level Hp1 of a first maximum bright point as a brightest point among the inputted images by analyzing a histogram of an inputted image;
(B) improving a brightness of the inputted image;
(C) analyzing a histogram of the brightness improved image; and
(D) improving a contrast of the brightness improved image by applying the image level Lp1 of the first minimum bright point and the image level Hp1 of the first maximum bright point.

And also, the step (C) derives an image level Lp2 of a second minimum bright point as a most dark point among the brightness improved images in the step (B) and an image level Hp2 of a second maximum bright point as a brightest point among the brightness improved images in the step (B).

And also, in the step (D), when OutImg is an image level of the output images, InImg is an image level of imaged outputted from the brightness improvement unit in the step (B), the Lp1 is an image level of the first minimum bright point, the Hp1 is an image level of the first maximum bright point, the Lp2 is an image level of the second minimum bright point and the Hp2 is an image level of the second maximum bright point,

$$OutImg = ((Hp2-Lp1) * (InImg-Lp2)/(Hp2-Lp2))+Lp1 \qquad \text{Equation 1}$$

the output image is outputted by improving the contrast by applying the Equation 1.

And also, in the step (D), {Hp2 + (Hp2-Hp1) *weight is substituted in place of Hp1 and {Lp2 + (Lp2-Lp1) *weight is substituted in place of the Lp1, and the weight becomes small as a real number ranging from 0 to 1, as being close to a single image.

And also, the step (C) further derives a width of image levels of the inputted images or a width of image levels of images outputted from the brightness improvement unit; and

the step (D) includes a process to determine a weight according to the width of image levels of the inputted images or the width of image levels of images outputted from the brightness improvement unit.

And also, the process to determine the weight sets a width of an image level of a single image as an image threshold value; and determine the weight as being in proportional to a difference between the width of the image level of the inputted image and the image threshold value or a difference between a width of an image level of images outputted from the brightness improvement unit and the image threshold value.

BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 is a view showing a histogram distribution of inputted images;

FIG. 2 is a view showing a histogram distribution of images after the histogram of the inputted images is stretched;

FIG. 3 is a view depicting a contrast improvement unit according to a prior art;

FIG. 4 is a view depicting an application example of linear function at a single color image according to a prior art;

FIG. 5 is an exemplary view showing an image processing device in accordance with an exemplary embodiment of the present invention;

FIG. 6 is an exemplary view schematically showing a brightness improvement unit in accordance with an exemplary embodiment of the present invention;

FIG. 7 is a view schematically showing a contrast improvement unit in accordance with an exemplary embodiment of the present invention;

FIG. 8 is a view showing a histogram of inputted images in accordance with an exemplary embodiment of the present invention;

FIG. 9 is a view schematically depicting one example of a gamma curve;

FIG. 10 is a view showing a brightness improvement principle of inputted images in accordance with an exemplary embodiment of the present invention;

FIG. 11 is an exemplary view schematically showing a method for processing images in accordance with an exemplary embodiment of the present invention; and

FIG. 12 is an exemplary view schematically showing a method for processing images in accordance with an exemplary embodiment of the present invention.

DETAILED DESCRIPTION OF THE PREFERABLE EMBODIMENTS

Hereinafter, exemplary embodiments of the present invention will be described in detail. However, the present invention is not limited to the embodiments disclosed below but can be implemented in various forms. The following embodiments are described in order to enable those of ordinary skill in the art to embody and practice the present invention. To clearly describe the present invention, parts not relating to the description are omitted from the drawings. Like numerals refer to like elements throughout the description of the drawings.

The terms used throughout this specification are provided to describe embodiments but not intended to limit the present invention. In this specification, a singular form includes a plural form unless the context specifically mentions. When an element is referred to as "comprises" and/or "comprising", it does not preclude another component, step, operation and/or device, but may further include the other component, step, operation and/or device unless the context clearly indicates otherwise.

Hereinafter, the constructions of the present invention and function effects thereof will be described in detail with reference to the accompanying drawings.

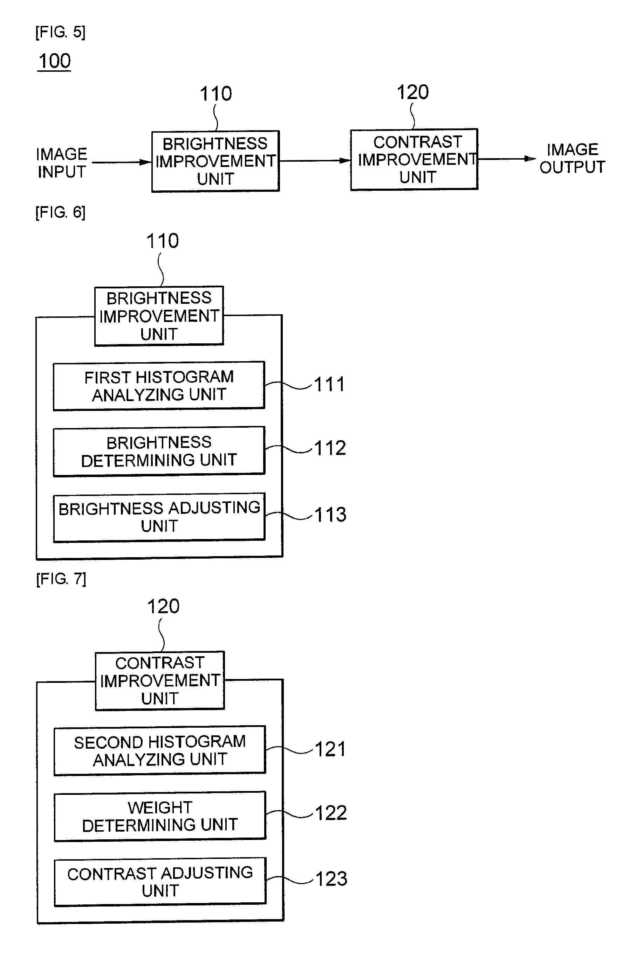

FIG. 5 is an exemplary view schematically showing an image processing device 100 in accordance with an exemplary embodiment of the present invention.

Referring to FIG. 5, the obtained images are outputted as images improved in brightness and contrast by being inputted into the image processing device 100 in accordance with one embodiment of the present invention including a brightness improvement unit 110 and a contrast improvement unit 120.

FIG. 6 is an exemplary view schematically showing a brightness improvement unit in accordance with an exemplary embodiment of the present invention.

Referring to FIG. 6, the brightness improvement unit 110 may include a first histogram analyzing unit 111, a brightness determining unit 112 and a brightness adjusting unit 113.

The first histogram analyzing unit 111 can calculate a frequency per a brightness of each inputted image and derive an image level of a first minimum bright point as a most dark point among the inputted images and an image level of a second minimum bright point as a brightest point among the inputted images.

And also, the first histogram analyzing unit 111 can derive a knee point.

At this time, the knee point is a concept to discriminate a bright image and a dark image.

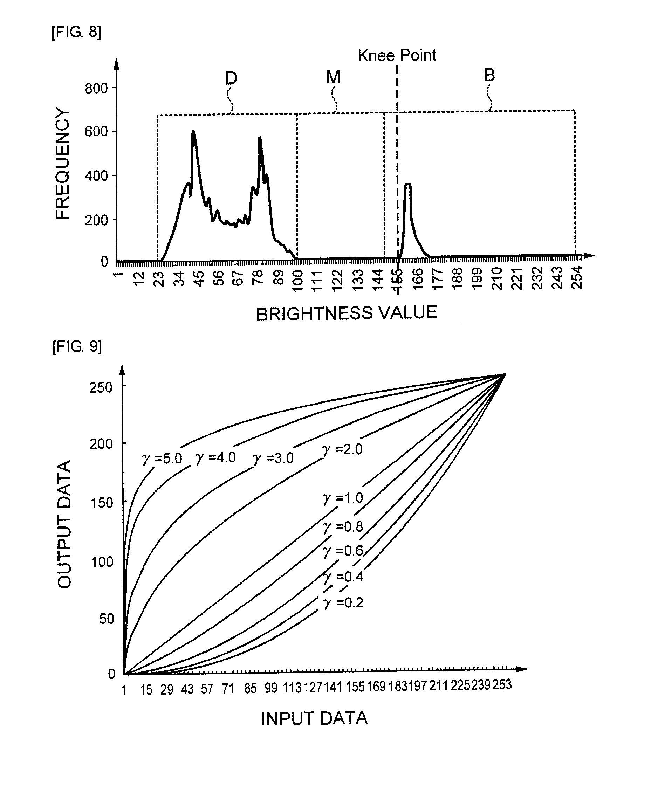

FIG. 8 is a view showing a histogram of inputted images in accordance with an exemplary embodiment of the present invention.

In case of an image photographed through an infrared photographed device, if the histogram is calculated, most of pixels are distributed in a dark region. For example, in case of an image obtained by using a night vision such as an infrared camera during a night driving, it may be a dark image in general, but a bright image can be included for a temporary or a specific region due to an external factor such as a street light or a head lamp of a vehicle driving from an opposite direction.

Referring to FIG. 8, the pixels distributed in a predetermined frequency at an image level ranging from 23 to 100 in a brightness value may be considered as a dark region D and the pixels distributed at an image level ranging from 157 to 177 in a brightness value may be considered as a bright region B.

On the other hand, a medium region M may be formed between the dark region D and the bright region B where few pixels are distributed.

For the image showing a histogram distribution as shown in FIG. 8, a critical distortion may be generated when a general brightness improvement or contrast improvement method such as the prior art can be applied.

In the present invention, in order to solve such distortion problems, although the brightness is increased for the dark region, but the brightness is decreased for the bright region.

In order to this, a concept of knee point is introduced.

The knee point becomes a boundary point to discriminate whether the brightness can be increased or decreased in the image processing device 100 in accordance with one embodiment of the present invention.

Such knee point may be obtained by a statistical method for a type of image.

And also, as shown in FIG. 8, considering on the histogram distribution consisting of the dark region D, the medium region M and the bright region B, the boundary point between the medium region M and the bright region B can be set to the knee point.

And also, since few pixels are distributed in the medium region M, in case when the change of frequency in the histogram of the inputted images is below a predetermined level, it may be considered as the medium region M and the change of frequency is rapidly changed as passing from the medium region M to the bright region B.

Considering on such characteristics, in the image processing device 100 in accordance with the embodiment of the present invention, the point that the change of frequency in the histogram of inputted images is changed from at a state being smaller than a predetermined value to a state being larger than the predetermined value is set to the knee point and the derivation of such knee point can be implemented in the first histogram analyzing unit 111.

Thereafter, the brightness determining unit 112 plays a role of comparing the brightness value of the inputted images to the knee point.

And then, the brightness adjusting unit 113 plays a role of adjusting the brightness by applying a first gamma curve having a gamma value $\gamma$ being larger than 1 for the image having the brightness value smaller than the knee point and applying a second gamma curve having a gamma value $\gamma$ being smaller than 1 for the image having the brightness value smaller than the knee point.

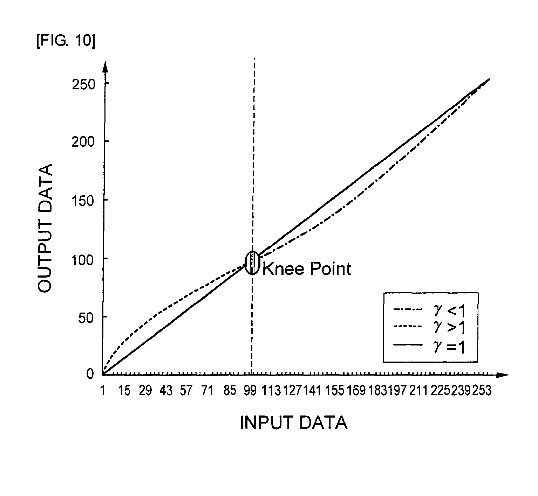

FIG. 9 is a view schematically depicting one example of a gamma curve; and FIG. 10 is a view showing a brightness improvement principle of inputted images in accordance with an exemplary embodiment of the present invention.

In general, the gamma curve is frequently used for correcting the distortion characteristics to be presented dark in the display device, and it utilizes the characteristics that the output level is in proportional to the square gamma square $\gamma^2$ of the input level.

At this time, the example of the gamma curve according to the change of gamma value $\gamma$ is shown in FIG. 8.

Meanwhile, in the image processing device 100 in accordance with the embodiment of the present invention, the gamma curve having the gamma value being smaller than 1 is used in the dark region in center of the knee point and the gamma curve having the gamma value being larger than 1 is used in the bright region.

At this time, it can be easily understood to an ordinarily skilled in the art that the size of the gamma value can be appropriately selected considering on the dark degree or the bright degree of the images.

Accordingly, it can be prevented from the problem that the bright image B is saturated in the brightness improvement process.

FIG. 7 is a view schematically showing a contrast improvement unit in accordance with an exemplary embodiment of the present invention.

Referring to FIG. 7, the contrast improvement unit 120 in accordance with one embodiment of the present invention may include a second histogram analyzing unit 121, a weight determining unit 122 and a contrast adjusting unit 123.

At first, the second histogram analyzing unit 121 plays the roles of calculating the frequency per each image outputted from the brightness improvement unit 110 and deriving an image level Lp2 of a second minimum bright point as a most dark point among the images outputted from the brightness improvement unit 110 and an image level Hp2 of a second maximum bright point as a brightest point among the images outputted from the brightness improvement unit 100.

And then, the contrast adjusting unit 123 improves the contrast of the images improved in brightness by using the following equation 1.

$$\text{OutImg} = ((\text{Hp2-Lp1}) * (\text{InImg-Lp2})/(\text{Hp2-Lp2})) + \text{Lp1} \qquad \text{Equation 1}$$

At this time, OutImg is an image level of the output images, InImg is an image level of imaged outputted from the brightness improvement unit, the Lp1 is an image level of the first minimum bright point, the Hp1 is an image level of the first maximum bright point, the Lp2 is an image level of the second minimum bright point and the Hp2 is an image level of the second maximum bright point.

Accordingly, since the image characteristics before improving the brightness are reflected on the contrast improvement, the conventional problem according to the determination of range for expanding the contrast by the previously set fixed value can be solved.

On the other hand, the image processing device 100 in accordance with the above-described embodiment reflects the image level Lp1 of the first minimum bright point and the image level Hp1 of the first maximum bright point on the contrast improvement as it is, in case when the inputted image is a single image, if the same method is applied, the distortion phenomenon of the image can be generated.

In order to prevent the distortion phenomenon generated in the brightness improvement and the contrast improvement processes for the single image, the image processing device 100 in accordance with one embodiment of the present invention can output the inputted image as it is in case of the single image by determining whether the inputted image or the brightness improved image has the characteristics similar to the single image or not.

In case of the single image, if the histogram is calculated, the difference between the minimum bright point and the maximum bright point is small. If such characteristics are utilized, the difference between the image levels Lp1 and Lp2 of the minimum bright points and the image levels Hp1 and Hp2 of the maximum bright points of the image histogram, that is, if the image level width Point_Diff is smaller than a predetermined image threshold IMG_TH, it may be considered as the single image. At this time, the width of the image level may be performed in the second histogram analyzing unit 121.

Like this, if it can be determined as the single image, the inputted image can be outputted as it is.

At this time, according to the conditions whether the image threshold value which becomes the reference to determine the single image is advantageous to prevent the distortion phenomenon for the single image or is further advantageous to improve the brightness although being distorted, it may be determined differently at a predetermined range.

On the other hand, in case when the brightness improvement and the contrast improvement can be simply determined for a case whether it is determined as the single image with reference to the image threshold value or not, there may occur a hunting phenomenon, i.e., the images are blurred, if the images which are continuously changed around the image threshold are processed.

For example, in case when the image threshold is set to 20, if the width of the image level is 19, the brightness and contrast improvements are not performed since it is considered as a single image. But, if the width of the image level is 21, the brightness is improved and the contrast is improved by applying the above-described equation 1, the characteristics difference from the image having the image level width of 19 becomes larger, accordingly the hunting phenomenon may be generated.

In order to overcome such problems, in the image processing device 100 in accordance with one embodiment of the present invention, by applying the weight, the image level Lp1 of the first minimum bright point and the image level Hp1 of the first maximum bright point are reflected on the contrast improvement.

That is, the values of Hpf and Lpf are calculated by using the following equation 2.

$$\text{Hpf} = \text{Hp2} + (\text{Hp2} - \text{Hp1}) * A \qquad \text{Equation 2}$$

$$Lpf = Lp2 + (Lp2 - Lp1)*A$$

At this time, the A is a real number being ranged from 0 to 1.

Thereafter, Hpf and Lpf are substituted in place of the Hp1 and Lp1 in the equation 1.

If the Hpf and Lpf are substituted as described above, the following equation 3 is obtained.

$$OutImg = ((Hpf-Lpf)*(InImg-Lp2)/(Hp2-Lp2))+Lpf \qquad \text{Equation 3}$$

At this time, the weight sets the image level width of the single color image as an image threshold value and is capable of determining in such a way that if the difference between the image level width derived from the second histogram analyzing unit 121 and the image threshold value becomes large, the weight increases; and, if the difference becomes small values, the weight decreases, and the weight determining unit 122 can be included for performing such calculation.

For example, if the image threshold value is 20 and the image level width is 21, the weight is determined as a value being close to 0; and, if the image level width is 30, the weight can be determined as a value being close to 1.

At this time, the mitigation degree of hunting phenomenon can be controlled by controlling the increasing rate of the weight. That is, if the weight is determined as 1 in case when the image level width is 30, the weight is increase by 0.1 per 1 of image level width; and, if the weight can be determined as 1 in case when the image level width is 40, in this results, the latter can further mitigate the hunting phenomenon in comparison with the former.

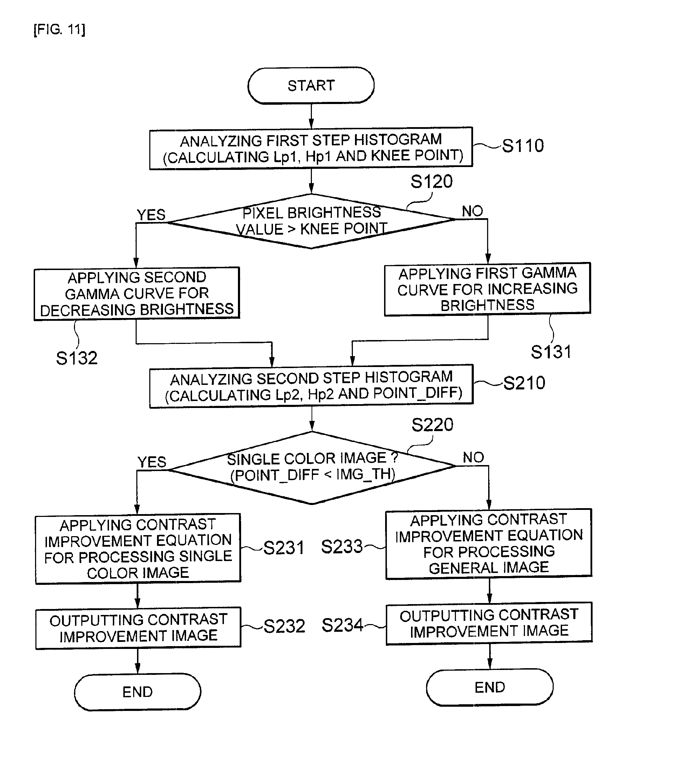

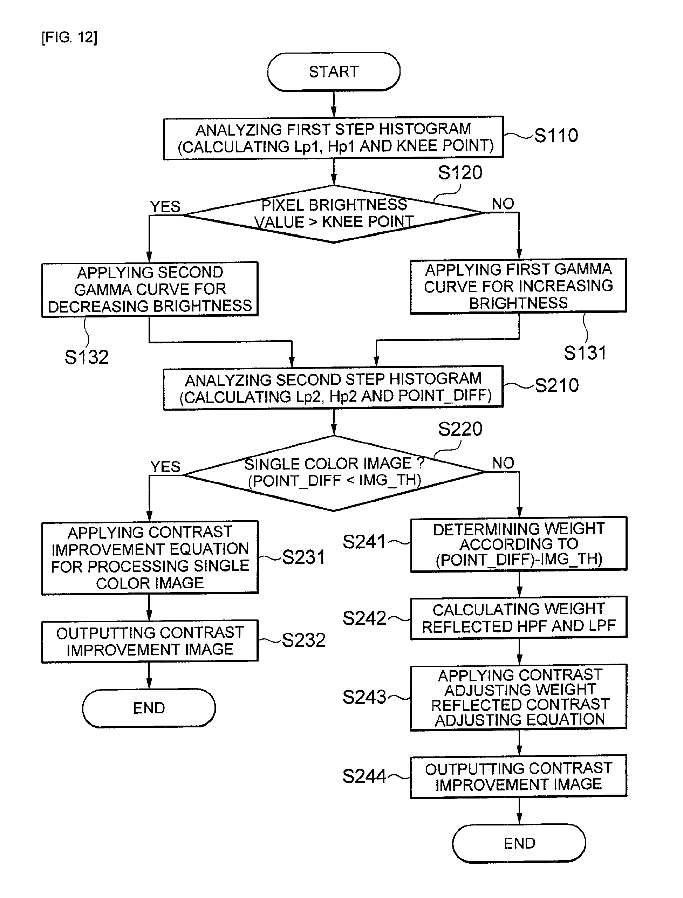

Hereinafter, referring to FIG. 11 and FIG. 12, a method for processing images in accordance with an exemplary embodiment of the present invention will be explained. At this time, the explanations of the repeated items will be omitted.

FIG. 11 is an exemplary view schematically showing a method for processing images in accordance with an exemplary embodiment of the present invention.

Referring to FIG. 11, if the image is inputted, a first step histogram analysis is performed S110. At this time, an image level of a first minimum bright point, an image level of a first maximum bright point and a knee point can be derived through the first histogram analysis.

And then, a pixel brightness value is compared to the knee point S120.

And then, in case when the pixel brightness value is smaller than the knee point, the brightness is increased by applying a first gamma curve S130; and, vice versa, the brightness is decreased by applying a second gamma curve S132.

Thereafter, in order to improve the contrast, a second step histogram analysis is performed S210.

At this time, an image level of a second minimum bright point, an image level of a second maximum bright point and an image level width Point_Diff or the like can be derived through the second step histogram analysis.

And then, by comparing the image level width to the image threshold value, it is determined whether the image is a single color or not S220.

And then, in case of single color image, the contrast improved image is outputted S234 by applying a contrast improved equation for processing a single color image in order to prevent the distortion phenomenon S232.

On the contrary, in case of non-single color image, the contrast improved image is outputted S234 by applying a contrast improved equation for processing a general image in order to prevent the distortion phenomenon S233.

FIG. 12 is an exemplary view schematically showing a method for processing images in accordance with an exemplary embodiment of the present invention.

Referring to FIG. 12, in case of non-single image, a weight is determined according to the difference between the image level width and the image threshold value S241, Hpf and Lpf reflected thereon the weight are calculated S242 and the contrast improved image is outputted S244 by applying the above-described equation 3 S243.

This invention may be embodied in different forms and should not be construed as limited to the embodiments set forth herein. Rather, these embodiments are provided so that this disclosure will be thorough and complete, and will fully convey the scope of the invention to those skilled in the art. As described above, although the preferable embodiments of the present invention have been shown and described, it will be appreciated by those skilled in the art that substitutions, modifications and variations may be made in these embodiments without departing from the principles and spirit of the general inventive concept, the scope of which is defined in the appended claims and their equivalents.

**Claims**

1. An image processing device comprising:

   a brightness improvement unit to improve a brightness of inputted images by increasing a brightness of a dark image more darker than a knee point among inputted images with reference to a predetermined knee point and decreasing a brightness of an image more brighter than the knee point; and
   a contrast improvement unit to improve a contrast of the image outputted from the brightness improvement unit.

2. The image processing device according to claim 1, wherein the knee point is set to a point to be changed to a state larger than a predetermined value under the condition that a change of frequency is smaller than the predetermined value at a histogram of the inputted images.

3. The image processing device according to claim 1, wherein the brightness improvement unit includes:

   a brightness determining unit to compare a brightness value of the inputted images with the knee point; and
   a brightness adjusting unit to adjust the brightness by applying a first gamma curve having a gamma $\gamma$ larger than 1 for an image having a brightness value smaller than the knee point and by applying a second gamma curve having a gamma $\gamma$ smaller than 1 for an image having a brightness value larger than the knee point according to a determined result of the brightness determining unit.

4. The image processing device according to claim 2, wherein the brightness improvement unit includes:

   a brightness determining unit to compare a brightness value of the inputted images with the knee point; and
   a brightness adjusting unit to adjust the brightness by applying a first gamma curve having a gamma $\gamma$ larger than 1 for an image having a brightness value smaller than the knee point and by applying a second gamma curve having a gamma $\gamma$ smaller than 1 for an image having a brightness value larger than the knee point according to a determined result of the brightness determining unit.

5. The image processing device according to claim 1, wherein the brightness improvement unit includes a first histogram analyzing unit to calculate a frequency for each brightness of the inputted images and derive an image level Lp1 of a first minimum bright point as the most dark point among the inputted images and an image level Hp1 of a first maximum bright point as the brightest point among the inputted images so as to supply the derived result to the contrast improvement unit.

6. The image processing device according to claim 1, wherein the brightness improvement unit includes a first histogram analyzing unit to calculate a frequency for each brightness of the inputted images, to derive an image level Lp1 of a first minimum bright point as the most dark point among the inputted images and an image level Hp1 of a first maximum bright point as the brightest point among the inputted images so as to supply the derived result to the contrast improvement unit, and to derive the knee point.

7. The image processing device according to claim 5, wherein the contrast improvement unit includes a second histogram analyzing unit to calculate a frequency for each brightness of the images outputted from the brightness improvement unit and derive an image level Lp2 of a second minimum bright point as the most dark point among the images outputted from the brightness improvement unit and an image level Hp2 of a second maximum bright point as the brightest point among the images outputted from the brightness improvement unit; and
   when OutImg is an image level of the output images, InImg is an image level of imaged outputted from the brightness improvement unit, the Lp1 is an image level of the first minimum bright point, the Hp1 is an image level of the first maximum bright point, the Lp2 is an image level of the second minimum bright point and the Hp2 is an image level of the second maximum bright point,

$$\text{OutImg} = ((\text{Hp2-Lp1}) *(\text{InImg-Lp2})/(\text{Hp2-Lp2}))+\text{Lp1} \qquad \text{Equation 1}$$

   the output image is outputted by improving the contrast by applying the Equation 1.

8. The image processing device according to claim 7, wherein {Hp2 + (Hp2-Hp1)

*weight is substituted in place of Hp1 and {Lp2 + (Lp2-Lp1) *weight is substituted in place of the Lp1, and the weight becomes small as a real number ranging from 0 to 1, as being close to a single image.

9. The image processing device according to claim 8, wherein the second histogram analyzing unit further derives a width of an image level of the inputted images or a width of an image level of the images outputted from the brightness improvement unit; and
the contrast improvement unit further comprises a weight determining unit to determine a weight according to the width of the image level of the inputted images or the width of the image level of the images outputted from the brightness improvement unit.

10. The image processing device according to claim 9, wherein the weight determining unit sets a width of an image level of a single image as an image threshold value; and
determines the weight as being in proportional to a difference between the width of the image level of the inputted image and the image threshold value or a difference between a width of an image level of images outputted from the brightness improvement unit and the image threshold value.

11. An image processing device comprising:

a brightness improvement unit to derive an image level Lp1 of a first minimum bright point Lp1 a most dark point among inputted images and an image level Hp1 of a first maximum bright point as the most brightest point among the inputted images and to improve a brightness of the inputted images; and
a contrast improvement unit to improve a contrast of the image outputted from the brightness improvement unit by applying the image level of the first minimum bright point and the image level of the first maximum bright point.

12. The image processing device according to claim 11, wherein the contrast improvement unit includes a second histogram analyzing unit to calculate a frequency for each brightness of the images outputted from the brightness improvement unit and derive an image level Lp2 of a second minimum bright point as the most dark point among the images outputted from the brightness improvement unit and an image level Hp2 of a second maximum bright point as the brightest point among the images outputted from the brightness improvement unit; and
when OutImg is an image level of the output images, InImg is an image level of imaged outputted from the brightness improvement unit, the Lp1 is an image level of the first minimum bright point, the Hp1 is an image level of the first maximum bright point, the Lp2 is an image level of the second minimum bright point and the Hp2 is an image level of the second maximum bright point,

$$OutImg = ((Hp2-Lp1) *(InImg-Lp2)/(Hp2-Lp2))+Lp1 \qquad \text{Equation 1}$$

the output image is outputted by improving the contrast by applying the Equation 1.

13. The image processing device according to claim 12, wherein {Hp2 + (Hp2-Hp1) *weight is substituted in place of Hp1 and {Lp2 + (Lp2-Lp1) *weight is substituted in place of the Lp1, and
the weight becomes small as a real number ranging from 0 to 1, as being close to a single image.

14. The image processing device according to claim 13, wherein the second histogram analyzing unit further derives a width of an image level of the inputted images or a width of an image level of the images outputted from the brightness improvement unit; and
the contrast improvement unit further comprises a weight determining unit to determine a weight according to the width of the image level of the inputted images or the width of the image level of the images outputted from the brightness improvement unit.

15. The image processing device according to claim 14, wherein the weight determining unit sets a width of an image level of a single image as an image threshold value; and
determines the weight as being in proportional to a difference between the width of the image level of the inputted image and the image threshold value or a difference between a width of an image level of images outputted from the brightness improvement unit and the image threshold value.

16. A method for processing an image comprising:

(E) analyzing a histogram of an inputted image;

(F) improving a brightness of the inputted image;

(G) analyzing a histogram of the brightness improved image; and

(H) improving a contrast of the brightness improved image,

wherein the step (b) improves a brightness of inputted images by increasing a brightness of a dark image more darker than a knee point among inputted images with reference to a predetermined knee point and decreasing a brightness of an image more brighter than the knee point.

17. The method for processing an image according to claim 16, wherein the knee point is set to a point to be changed to a state larger than a predetermined value under the condition that a change of frequency is smaller than the predetermined value at a histogram of the inputted images.

18. The method for processing an image according to claim 16, wherein the step (A) is to derive a point to be changed to a state larger than a predetermined value under the condition that a change of frequency is smaller than the predetermined value at a histogram of the inputted images as the knee point by analyzing the histogram of the inputted image.

19. The method for processing an image according to claim 16, wherein the step (B) is to improve a brightness by applying a first gamma curve having a gamma $\gamma$ larger than 1 for an image having a brightness value smaller than the knee point and by applying a second gamma curve having a gamma $\gamma$ smaller than 1 for an image having a brightness value larger than the knee point according to a determined result of the brightness determining unit.

20. The method for processing an image according to claim 17, wherein the step (B) includes:

(b1) comparing a brightness value of an inputted image to the knee point; and

(b2) according to a determined result of the step (b1), improving a brightness by applying a first gamma curve having a gamma $\gamma$ larger than 1 for an image having a brightness value smaller than the knee point and by applying a second gamma curve having a gamma $\gamma$ smaller than 1 for an image having a brightness value larger than the knee point.

21. The method for processing an image according to claim 16, wherein the step (A) derives an image level Lp1 of a first minimum bright point among the inputted images as a most dark point and an image level Hp1 of a first maximum bright point as a brightest point among the inputted images by analyzing a histogram of the inputted images.

22. The method for processing an image according to claim 21, wherein the step (C) derives an image level Lp2 of a second minimum bright point as a most dark point among the brightness improved images in the step (B) and an image level Hp2 of a second maximum bright point as a brightest point among the brightness improved images in the step (B).

23. The method for processing an image according to claim 22, wherein, in the step (D),

when OutImg is an image level of the output images, InImg is an image level of imaged outputted from the brightness improvement unit in the step (B), the Lp1 is an image level of the first minimum bright point, the Hp1 is an image level of the first maximum bright point, the Lp2 is an image level of the second minimum bright point and the Hp2 is an image level of the second maximum bright point,

$$OutImg = ((Hp2-Lp1) * (InImg-Lp2)/(Hp2-Lp2))+Lp1 \qquad \text{Equation 1}$$

the output image is outputted by improving the contrast by applying the Equation 1.

24. The method for processing an image according to claim 23, wherein, in the step (D), {Hp2 + (Hp2-Hp1) *weight is substituted in place of Hp1 and {Lp2 + (Lp2-Lp1) *weight is substituted in place of the Lp1, and

the weight becomes small as a real number ranging from 0 to 1, as being close to a single image.

25. The method for processing an image according to claim 24, wherein the step (C) further derives a width of image levels of the inputted images or a width of image levels of images outputted from the brightness improvement unit; and

the step (D) includes a process to determine a weight according to the width of image levels of the inputted images or the width of image levels of images outputted from the brightness improvement unit.

26. The method for processing an image according to claim 25, wherein the process to determine the weight sets a width of an image level of a single image as an image threshold value; and
determine the weight as being in proportional to a difference between the width of the image level of the inputted image and the image threshold value or a difference between a width of an image level of images outputted from the brightness improvement unit and the image threshold value.

27. A method for processing an image comprising:

(C) deriving an image level Lp1 of a first minimum bright point as a most dark point among the inputted images and an image level Hp1 of a first maximum bright point as a brightest point among the inputted images by analyzing a histogram of an inputted image;
(D) improving a brightness of the inputted image;
(C) analyzing a histogram of the brightness improved image; and
(D) improving a contrast of the brightness improved image by applying the image level Lp1 of the first minimum bright point and the image level Hp1 of the first maximum bright point.

28. The method for processing an image according to claim 27, wherein the step (C) derives an image level Lp2 of a second minimum bright point as a most dark point among the brightness improved images in the step (B) and an image level Hp2 of a second maximum bright point as a brightest point among the brightness improved images in the step (B).

29. The method for processing an image according to claim 28, wherein, in the step (D),
when OutImg is an image level of the output images, InImg is an image level of imaged outputted from the brightness improvement unit in the step (B), the Lp1 is an image level of the first minimum bright point, the Hp1 is an image level of the first maximum bright point, the Lp2 is an image level of the second minimum bright point and the Hp2 is an image level of the second maximum bright point,

$$\text{OutImg} = ((Hp2\text{-}Lp1) * (InImg\text{-}Lp2) / (Hp2\text{-}Lp2)) + Lp1 \qquad \text{Equation 1}$$

the output image is outputted by improving the contrast by applying the Equation 1.

30. The method for processing an image according to claim 23, wherein, in the step (D), {Hp2 + (Hp2-Hp1) *weight is substituted in place of Hp1 and {Lp2 + (Lp2-Lp1) *weight is substituted in place of the Lp1, and
the weight becomes small as a real number ranging from 0 to 1, as being close to a single image.

31. The method for processing an image according to claim 30, wherein the step (C) further derives a width of image levels of the inputted images or a width of image levels of images outputted from the brightness improvement unit; and
the step (D) includes a process to determine a weight according to the width of image levels of the inputted images or the width of image levels of images outputted from the brightness improvement unit.

32. The method for processing an image according to claim 31, wherein the process to determine the weight sets a width of an image level of a single image as an image threshold value; and
determine the weight as being in proportional to a difference between the width of the image level of the inputted image and the image threshold value or a difference between a width of an image level of images outputted from the brightness improvement unit and the image threshold value.

[FIG. 1]

- PRIOR ART -

[FIG. 2]

- PRIOR ART -

[FIG. 3]

IMAGE INPUT → HISTOGRAM CALCULATION UNIT (11) → HISTOGRAM ANALYSIS UNIT (12)

LINEAR FUNCTION APPLYING UNIT (13)

GAMMA CURVE APPLYING UNIT (14)

HISTOGRAM STRETCHING UNIT (15) → IMAGE OUTPUT

- PRIOR ART -

[FIG. 4]

$(x2, y2)$

$FH_H$

$FH_L$

$(x1, y1)$

$H_L$　$H_H$

- PRIOR ART -

[FIG. 5]

<u>100</u>

110

120

IMAGE INPUT → BRIGHTNESS IMPROVEMENT UNIT → CONTRAST IMPROVEMENT UNIT → IMAGE OUTPUT

[FIG. 6]

110

BRIGHTNESS IMPROVEMENT UNIT

FIRST HISTOGRAM ANALYZING UNIT —111

BRIGHTNESS DETERMINING UNIT —112

BRIGHTNESS ADJUSTING UNIT —113

[FIG. 7]

120

CONTRAST IMPROVEMENT UNIT

SECOND HISTOGRAM ANALYZING UNIT —121

WEIGHT DETERMINING UNIT —122

CONTRAST ADJUSTING UNIT —123

[FIG. 8]

[FIG. 9]

[FIG. 10]

Knee Point

γ <1
γ >1
γ =1

OUTPUT DATA

INPUT DATA

1  15  29  43  57  71  85  99  113 127 141 155 169 183 197 211 225 239 253

[FIG. 11]

[FIG. 12]

```
                          ┌─────────────┐
                          │    START    │
                          └─────────────┘
                                 │
                                 ▼
              ┌────────────────────────────────────┐
              │  ANALYZING FIRST STEP HISTOGRAM     │── S110
              │  (CALCULATING Lp1, Hp1 AND KNEE     │
              │   POINT)                            │
              └────────────────────────────────────┘
                                 │         S120
                                 ▼
               YES       ╱ PIXEL BRIGHTNESS ╲    NO
           ┌────────────◇  VALUE > KNEE POINT  ◇────────────┐
           │             ╲                  ╱               │
           ▼                                                ▼
  ┌──────────────────┐                        ┌──────────────────┐
  │ APPLYING SECOND  │                        │ APPLYING FIRST   │
  │ GAMMA CURVE FOR  │                        │ GAMMA CURVE FOR  │
  │ DECREASING       │                        │ INCREASING       │
  │ BRIGHTNESS       │                        │ BRIGHTNESS       │
  └──────────────────┘                        └──────────────────┘
          │  S132                                      │  S131
          └──────────────┐          ┌─────────────────┘
                         ▼          ▼
              ┌────────────────────────────────────┐
              │ ANALYZING SECOND STEP HISTOGRAM     │── S210
              │ (CALCULATING Lp2, Hp2 AND           │
              │  POINT_DIFF)                        │
              └────────────────────────────────────┘
                                 │         S220
                                 ▼
               YES       ╱ SINGLE COLOR IMAGE ? ╲   NO
           ┌────────────◇ (POINT_DIFF < IMG_TH)  ◇───────────┐
           │             ╲                     ╱             │
           ▼                                                 ▼
  ┌──────────────────┐                        ┌──────────────────┐
  │ APPLYING         │                        │ DETERMINING      │
  │ CONTRAST         │── S231        S241──    │ WEIGHT           │
  │ IMPROVEMENT      │                        │ ACCORDING TO     │
  │ EQUATION FOR     │                        │ (POINT_DIFF)-    │
  │ PROCESSING       │                        │ IMG_TH)          │
  │ SINGLE COLOR     │                        └──────────────────┘
  │ IMAGE            │                                 │
  └──────────────────┘                                 ▼
           │                               ┌──────────────────┐
           ▼                      S242──   │ CALCULATING      │
  ┌──────────────────┐                     │ WEIGHT REFLECTED │
  │ OUTPUTTING       │── S232               │ HPF AND LPF      │
  │ CONTRAST         │                     └──────────────────┘
  │ IMPROVEMENT      │                              │
  │ IMAGE            │                              ▼
  └──────────────────┘                  ┌──────────────────┐
           │                            │ APPLYING         │
           ▼                   S243──   │ CONTRAST         │
      ┌─────────┐                       │ ADJUSTING WEIGHT │
      │   END   │                       │ REFLECTED        │
      └─────────┘                       │ CONTRAST         │
                                        │ ADJUSTING        │
                                        │ EQUATION         │
                                        └──────────────────┘
                                                 │
                                                 ▼
                              ┌──────────────────┐
                    S244──    │ OUTPUTTING       │
                              │ CONTRAST         │
                              │ IMPROVEMENT      │
                              │ IMAGE            │
                              └──────────────────┘
                                       │
                                       ▼
                                  ┌─────────┐
                                  │   END   │
                                  └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110099227

- KR 100916073